# EUROPÄISCHE PATENTSCHRIFT

(11) **EP 0 751 660 B1**
(45) Veröffentlichungstag und Bekanntmachung des Hinweises auf die Patenterteilung: **19.11.2003**
(21) Anmeldenummer: 96109794.6
(22) Anmeldetag: 18.06.1996
(51) Int. Cl.: H04M 3/30, H04M 1/24, H04M 19/00, H04M 19/08

(54) **Verfahren zur Feststellung der ordnungsgemässen Fernspeisung von an ein Kommunikationssystem angeschlossenen Kommunikationsendgeräten**
Method for determination of proper remote feeding of communication terminals connected to a communication system
Procédé de détermination de téléalimentation correcte des terminaux de communication connectés à un système de communication

(30) Priorität: 29.06.1995 DE 19523792
(43) Veröffentlichungstag der Anmeldung: 02.01.1997
(73) Patentinhaber: SIEMENS AKTIENGESELLSCHAFT, 80333 München (DE)
(72) Erfinder: Brune, Georg, Dr.-Ing., 58675 Hemer (DE); Dziennus, Norbert, Dipl.-Ing., 44227 Dortmund (DE); Knaak, Uwe, 45659 Recklinghausen (DE)

(56) Entgegenhaltungen:
- EP-A- 0 580 893
- DE-A- 3 416 828
- PATENT ABSTRACTS OF JAPAN vol. 18, no. 10 (E-1487), 10.Januar 1994 & JP-A-05 252286 (MATSUSHITA ELECTRIC IND CO), 28.September 1993,
- PATENT ABSTRACTS OF JAPAN vol. 16, no. 447 (E-1266), 17.September 1992 & JP-A-04 157996 (NEC CORP.), 29.Mai 1992,
- NTT REVIEW, Bd. 6, Nr. 1, Januar 1994, TOKYO, JAPAN, Seiten 84-86, XP000425230 Y. MAEDA ET AL.: "A new subscriber metallic line supervising system for public telephone services"

## Beschreibung

Die Erfindung betrifft ein Verfahren zur Feststellung der ordnungsgemäßen Fernspeisung von Kommunikationsendgeräten, die über die Anschlußleitung an ein programmgesteuertes Kommunikationssystem angeschlossen sind, wobei die unter anderem die vermittlungstechnische und betriebstechnische Steuerung und Koordinierung durchführende zentrale Systemsteuerung aus einem Systemspeicher zur Speicherung der Programmodule und zur Speicherung von Daten und einem Systemprozessor besteht und in Folge der von den Endgeräten übermittelten Anreizinformationen Ausgabeinformationen zur Darstellung an der Anzeigeeinrichtung des jeweiligen Endgerätes gebildet werden.

Für zeitgemäße Kommunikationssysteme sind viele unterschiedliche Leistungsmerkmale bekannt, die einerseits den Bedienkomfort steigern und andererseits über die Grundfunktionen der Vermittlung hinausgehende Verbindungsmöglichkeiten bieten. Neben den Zifferntasten weisen die angeschlossenen Kommunikationsendgeräte zusätzliche Funktionstasten auf, denen durch entsprechende betriebstechnische Anweisungen unterschiedliche Funktionen zugeordnet werden können. In der Regel sind in derartigen Funktionstasten Leuchtelemente, z.B. in Form von lichtemittierenden Dioden, integriert. Neben diesen Leuchtelementen ist als weitere Leuchtanzeige ein sogenanntes Display im Endgerät vorhanden. Diese optischen Anzeigen sowie die akustischen Anzeigen und die weiteren Baueinheiten des Endgerätes werden über die Anschlußleitung aus dem Kommunikationssystem gespeist. Hierzu sind anlagenseitig spezielle Speiseschaltungen mit der jeweiligen Leitung gekoppelt. Im Betrieb eines Endgerätes könnten nun Belastungsfälle auftreten, bei denen die ordnungsgemäße Speisung nicht mehr gewährleistet ist. In einem solchen Fall wäre dann die maximale Leitungslänge für das betreffende Endgerät überschritten. Diese Leitungslänge ist abhängig von der Art der verwendeten Kabel sowie von der jeweiligen Konfiguration der Endgerätetypen. So können sich beispielsweise ein Komfortfernsprechendgerät und ein Standardfernsprechendgerät, insbesondere im Zusammenhang mit zusätzlichen Konsolen in der Leistungsaufnahme unterscheiden. Bei einem Kommunikationssystem, das ISDN-orientierte Schnittstellen zur Kopplung an die Leitungen aufweist, ist die Bestimmung der maximalen Leitungslänge im Sinne einer ordnungsgemäßen Fernspeisung der Komponenten des Endgerätes zusätzlich problematisch, da an einer derartigen ISDN-Verbindung zumindest zwei kaskadiert angeordnete Endgeräte vorgesehen sein können. Jedem Endgerät ist dann für die Informationsübermittlung einer der beiden Nachrichtenkanäle selektiv zugeordnet, während der Signalisierungskanal beiden Endgerät gemeinsam ist.

Es ist die Aufgabe der Erfindung, sicherzustellen, daß im Hinblick auf die notwendige Speisung die Funktionalität des jeweiligen Endgerätes gewährleistet ist.

Diese Aufgabe wird durch die kennzeichnenden Merkmale des Patentanspruches 1 gelöst.

Der wesentliche Aspekt des erfindungsgemäßen Verfahrens besteht darin, daß für das jeweilige Endgerät bzw. die jeweiligen Endgerätekonfigurationen angenähert die maximale Belastung aktiviert wird. Diese Belastung ist im wesentlichen durch den Leuchtzustand der am Endgerät vorhandenen diskreten Leuchtelemente, der Ansteuerung sämtlicher Anzeigeelemente der Anzeigeeinrichtung, die z.B. durch ein sogenannten LCD-Display realisiert ist, und durch die Aktivierung der Tonoder Ruferzeugung gegeben. Durch die Aktivierung sämtlicher Anzeigeeinrichtungen des Endgerätes wird der Belastungsgrenzwert erreicht, so daß der sich eingangsseitig ergebende Leitungsspannungswert die Feststellung ermöglicht, ob die Energieversorgung ausreichend ist oder ob die Reichweite der jeweiligen Anschlußleitung hierfür zu gering ist. Sinkt bei dem hinsichtlich der Belastung aktivierten ungünstigsten Betriebsfall die Spannung unter einem gewissen Wert, so wird eine entsprechende Signalisierungsinformation gebildet und der Systemsteuerung übermittelt. Aufgrund dieser Signalisierungsinformation wird an geeigneter Stelle eine entsprechende Anzeige veranlaßt, so daß daraus für das betreffende Endgerät bzw. die Endgerätekonfiguration die Notwendigkeit der Anschaltung einer lokalen Zusatzspeiseeinrichtung erkennbar ist.

Erfindungsgemäß kann der Steuerbefehl zur Feststellung einer ausreichenden Speisungsreichweite entweder von einem Endgerät aus durch eine vorgegebene Prozedursteuerinformation oder zeitgesteuert durch die Systemsteuerung initiiert werden. Damit wird dann bewirkt, daß die genannte Prüfung entweder automatisch für alle angeschlossenen Kommunikationsendgeräte oder je nach Festlegung nur für eine vorgebbare Anzahl von definierten Kommunikationsendgeräten veranlaßt wird und eine entsprechende Anzeige bzw. Registrierung erfolgt. Eine derartige Anzeige kann beispielsweise gemäß Anspruch 5 aus der Anzeigeeinrichtung eines vorbestimmten Kommunikationsendgerätes, beispielsweise des Systemfernsprechendgerätes, oder vermittels einer zentralen Druckeinrichtung ausgegeben werden. Eine andere Möglichkeit besteht darin, den Steuerbefehl von einem Endgerät durch eine vorgegebene Prozedursteuerinformation zu initiieren und damit gleichzeitig sicherzustellen, daß die Anzeige des Prüfergebnisses über diesen vorgenommenen Reichweitentest ausschließlich an diesem Endgerät erfolgt. Es kann dann gleichzeitig eine visuelle Kontrolle der vorschriftsgemäßen Funktion aller optischen Elemente durch den betreffenden Teilnehmer vorgenommen werden. Neben einer routinemäßigen zeitgesteuerten Überprüfung kann vorgesehen sein, daß diese Reichweitenüberprüfung automatisch bei der Inbetriebnahme eines Systems mit dessen Initialisierung vorgenommen wird. Gemäß einer Weiterbildung der Erfindung wird die eine mangelnde Speisespannungsversorgung repräsentierende Signalinformation durch einen bei Unterschreitung des vorgegebenen Endgeräteeingangs-Spannungswertes verursachten Reset des betreffenden Endgerätes gebildet. Daraus resultiert dann eine erneute Initialisierungsaufforderungsmeldung des Endgerätes, so daß die Systemsteuerung die unzureichende Speisespannungsversorgung erkennt.

Weitere vorteilhafte Ausgestaltungen der Erfindung sind den restlichen Unteransprüchen zu entnehmen.

Die Erfindung wird im folgenden anhand eines figürlich dargestellten Ausführungsbeispiels erläutert.

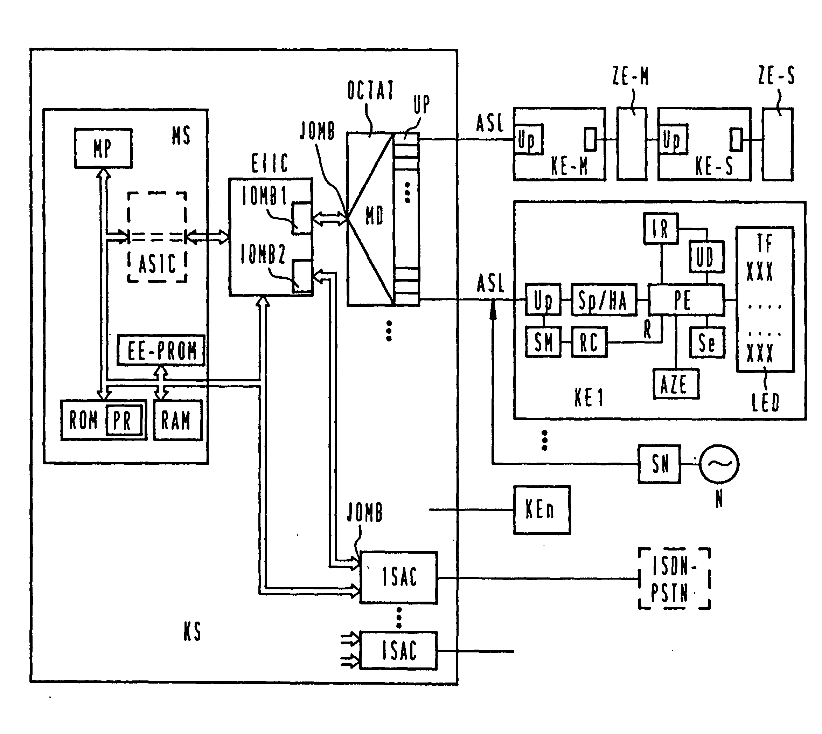

In der FIGUR ist die Struktur eines Kommunikationssystems schematisch dargestellt. Es sind lediglich die zum Verständnis der Erfindung notwendigen Komponenten gezeigt.

Das gezeigte ISDN-Telekommunikationssystem KS, das ein sogenanntes kleines bzw. mittleres Kommunikationssystem darstellen soll, wird im wesentlichen durch ein Mikroprozessorsystem MS, eine Vermittlungseinheit ELIC, eine Übertragungseinheit OCTAT sowie von ISDN-Basisanschlußeinheiten ISAC gebildet. Weiterhin ist noch eine Brgänzungseinheit ASIC vorgesehen, die unter anderem der Takterzeugung und der Übermittlung von Hör- bzw. Musiktönen an Kommunikationsendgeräte dient und die außerdem eine Synchronisationseinrichtung enthält. In der dargestellten ISDN-Übertragungseinheit OCTAT sind acht Übertragungsschaltungen integriert. Durch jede dieser Übertragungsschaltungen ist eine nach dem Zeitgetrenntlage-Verfahren wirkende Up-Schnittstelle realisiert. Jede dieser Up-Schnittstellen ist für den Anschluß eines mit einer gleichartigen Up-Schnittstelle ausgestatteten Kommunikationsendgerätes KE1...KEn bzw. KE-M und KE-S vorgesehen und ermöglicht eine bidirektionale Informationsübermittlung. Die beiden letztgenannten Kommunikationsendgeräte sind Kommunikationsendgeräte mit jeweils einem Nachrichtenkanal, die mit Hilfe zusätzlicher separater oder im Kommunikationsendgerät KE-M bzw. KE-S realisierter Einrichtungen angeschlossen sind. Bei der Up-Schnittstelle umfaßt die bidirektionale Informationsübermittlung zwei Nachrichtenkanäle - die bei ISDN-Verbindungen mit B-Kanäle bezeichnet sind - sowie einen als D-Kanal bezeichneten Signalisierungskanal und zusätzliche Informationen für eine Rahmensynchronisation bzw. zusätzliche Dienstkanäle. Die empfangenen bzw. die zu sendenden Nachrichten- und Signalisierungsinformationen werden mit Hilfe einer in der Übertragungseinheit OCTAT angeordneten Multiplex-/Demultiplex-Einrichtung MD zu einem Informationsstrom zusammengefaßt, wobei als steuernde Schnittstelle eine sogenannte ISDN-orientierte interne Systembusschnittstelle IOMB dient. Die Systemschnittstelle IOMB ist an eine erste gleichartig realisierte interne, ISDN-orientierte Systembusschnittstelle IOMB1 der Peripheriesteuerung ELIC geschaltet. In dieser ist diese Systembusschnittstelle von einer nicht gezeigten Signalisierungskanalsteuerung realisiert, mit deren Hilfe die Zuteilung bzw. das Sperren der Signalisierungskanäle über die Anschlußleitung ASL zu den ISDN-Kommunikationsendgeräten bewirkt wird. In dieser Signalisierungskanalsteuerung ist eine weitere ISDN-orientierte, interne Systembusschnittstelle IOMB2 realisiert. Jede dieser Systembusschnittstellen ist mit jeweils einer ISDN-Basisanschlußeinheit ISAC verbunden. Jede dieser Basisanschlußeinheiten ist mit einer Systembusschnittstelle IOMB ausgestattet. Über eine derartige Basisanschlußeinheit ISAC kann über eine dort realisierte SO-Schnittstelle auch ein ISDN-Anschluß eines öffentlichen Kommunikationsnetzes PSTN angeschaltet sein. Innerhalb der Übertragungseinheit ELIC ist eine nicht weiter dargestellte Koppelfeldeinrichtung, z.B. in Form eines zeitschlitzgesteuerten Koppelfeldes implementiert. Mit Hilfe dieses Koppelfeldes sind die Nachrichtenkanäle vermittelbar.

Das Mikroprozessorsystem MS ist durch einen Mikroprozessor MP und durch diesem zugeordnete Speichereinheiten gebildet. Im Lesespeicher ROM sind insbesondere die die vermittlungstechnischen Funktionen und Komponenten des Kommunikationssystems KS koordinierenden Programme gespeichert. Im Schreib-/Lese-Speicher RAM ist der Arbeitsspeicher des Mikroprozessors MP und ein Speicherbereich für die verbindungsindividuelle Speicherung von Verbindungsinformationen vorgesehen. Der Arbeitsspeicher dient unter anderem der Aufnahme von temporären Daten zur Programmablaufsteuerung. Der Speicherbereich EEPROM verliert bei einem Spannungsausfall seine in ihm gespeicherten Daten nicht und er repräsentiert den sogenannten Kundendatenspeicher. In diesem sind die Kundendaten, wie z.B. die den einzelnen Endgeräten zugeteilten Berechtigungen und die Anlagenkonfiguration abgelegt.

Wie für das Fernsprechendgerät KE1, das beispielsweise das Systemfernsprechendgerät darstellt, in der FIGUR angedeutet ist, weist dieses ein Tastenfeld TF auf, das die nicht im einzelnen dargestellten numerischen Tasten für die Eingabe von Wahlinformationen und weitere Funktionstasten für die Eingabe von Zusatzfunktionen enthält. Durch die Betätigung der vorhandenen Funktionstasten können jeweils bestimmte, beispielsweise leistungsmerkmalsbezogene Funktionsabläufe aktiviert werden. Diese werden dann mittels des Anlagenbetriebsprogramms realisiert. Solche Funktionstasten können bestimmten Funktionen fest zugeordnet sein oder alternativ hierzu frei zugeordnet werden. Die Tasten des Tastenfeldes TF sind mit einer in jeder Endeinrichtung KE zur Steuerung ihrer Funktionen vorhandenen und z.B. durch einen Prozessor realisierten Steuereinheit PE gekoppelt. Mit dieser Steuereinheit PE sind ferner Einheiten IR, UD, Se und AZE verbunden. Die Einheit IR erkennt die Betätigung einzelner Tasten, bildet entsprechende Signalisierungsinformationen und gibt diese an das Vermittlungssystem oder auch an die dem Endgerät zugeordnete Anzeigeeinrichtung AZE weiter. Diese Anzeigeeinrichtung ist beispielsweise durch ein ein- oder mehrzeiliges LCD-Display realisiert. Sie ist im allgemeinen für die Anzeige von Ziffern-, Text- und Wahlinformationen vorgesehen.

Die Einheit UD registriert diejenigen Informationen, die im Fernsprechendgerät KE über den Signalisierungskanal vom Vermittlungssystem KS zur weiteren Verarbeitung zugeführt werden. Die Einheit Se ist als Speicher ausgebildet und dient beispielsweise der Aufnahme eines Betriebsprogrammes für die Steuereinheit PE und für die Aufnahme von zwischenzuspeichernden Daten. Mit der Einheit HA-SP ist die Sprechschaltung symbolisch angedeutet.

Es besteht die Möglichkeit, festzustellen, ob die jeweilige Leitungslänge für eine ordnungsgemäße Speisung des Endgerätes bzw. einer Endgerätekombination noch ausreichend ist. Die maximale Leitungslänge einer Up-Schnittstellenkonfiguration ist abhängig von den verwendeten Kabeln und der jeweiligen Konfiguration der Endgerätetypen. Im Zusammenhang mit dieser Überprüfung wird unter Einschaltung eines Prüfprogrammoduls PR veranlaßt, daß das jeweilige Endgerät den größtmöglichen Leistungsverbrauch hat. Zu diesem Zweck werden durch die Systemsteuerung die diesen maximalen Verbrauch im wesentlichen bestimmenden optischen Anzeigen und die akustische Anzeige aktiviert. Im Rahmen einer derartigen Überprüfung der Reichweite werden vom Kommunikationssystem KS über den Signalisierungskanal digitale Meldungen für die Ton- und/oder Rufsignalisierung und Meldungen zur Anzeigensignalisierung für die Leuchtelemente LED und für das Display an die Kommunikationsendgeräte KE abgegeben. Aufgrund dieser Meldungen werden im jeweiligen Kommunikationsendgerät alle Pixel des Displays dunkel gesteuert und alle anderen Leuchtanzeigen LED angeschaltet. Weiterhin wird aufgrund einer entsprechenden Meldung über den Lautsprecher des zu prüfenden Fernsprechendgerätes der Ruf in der maximalen Lautstärke abgegeben. Die Ansteuerung des Lautsprechers mit dem in der Meldung enthaltenen Takt erfolgt vermittels des Generators, der im Endgerät, z.B. in einem integrierten Telekommunikationsschaltkreis, z.B. SICOFI, enthalten ist.

Die Überprüfung der Funktionalität des Endgerätes hinsichtlich der optischen und akustischen Anzeigen sowie die Feststellung, ob die maximale Leitungslänge überschritten ist und somit eine Zusatzspeiseeinrichtung erforderlich wird, kann in unterschiedlichen Situationen vorgenommen werden. Diese Prüfabläufe sind beispielsweise bei der Inbetriebnahme des Kommunikationssystems oder zu beliebigen anderen Zeitpunkten zu Wartungszwecken zu aktivieren. Dies erfolgt dann beispielsweise durch die Eingabe einer vorgeschriebenen Prozedur. Es kann auch vorgesehen sein, daß zumindest bei der Initialisierung des Kommunikationssystems diese Überprüfung vollautomatisch vorgenommen wird. Die notwendigen Meldungen können dann für jede Up-Leitung bzw. für jedes daran angeschlossene Endgerät nacheinander übermittelt werden. Dies gilt sowohl für die automatische als auch für die manuell über die Prozedur angestoßene Überprüfung. Es kann im Prüfprogramm festgelegt sein, daß mit der Eingabe der Prozedurinformationen bestimmt wird, ob sämtliche Kommunikationsendgeräte oder nur ein bestimmter Teil dieser Kommunikationsendgeräte in diese damit initiierte Reichweitenprüfung einbezogen wird. Diese Prozedureingabe kann von einem vorbestimmten Kommunikationsendgerät, beispielsweise dem sogenannten Systemfernsprechendgerät, aus erfolgen. Das Ergebnis der jeweiligen Überprüfung wird dann auch an diesem Fernsprechendgerät angezeigt. Es kann auch vorgesehen sein, daß das Prüfergebnis über eine Druckeinrichtung ausgegeben wird. Eine andere programmtechnisch festgelegte Möglichkeit kann darin bestehen, daß von einem Endgerät aus die Prüfprozedur gestartet wird und das Ergebnis dann auf dem Display dieses jeweiligen Endgerätes angezeigt wird. Beim Anstoß der Prüfprozedur von einem Endgerät aus besteht dann gleichzeitig für die diese Abläufe initiierenden Person die Möglichkeit, visuell zu kontrollieren, inwieweit die Leuchtanzeigen an dem betreffenden Kommunikationsendgerät tatsächlich in den Leuchtzustand geschaltet werden. Aus der Gesamtheit der Leuchtanzeigen einschließlich des Displays sind defekte Anzeigen bzw. Anzeigenelemente sofort erkennbar.

Wie erwähnt, wird durch die im Zeichenkanal übermittelten Meldungen über die Anschaltung der optischen und akustischen Verbraucher und die Meldungen für die Parametereinstellung im jeweiligen Kommunikationsendgerät, beispielsweise KE1, die maximale Belastung bewirkt. Die aufgrund dieser Belastung leitungseingangsseitig sich einstellende Spannung wird durch die Einheit SM registriert und gleichzeitig wird festgestellt, ob ein bestimmter Spannungswert unterschritten wird. Wird dies durch die in bekannter Weise vorgenommene Vergleichsprüfung bestätigt, so wird für das betreffende Endgerät ein Reset R ausgelöst. Das bedeutet, daß die im Endgerät vorgenommenen Einstellungen gelöscht werden und ein definierter Ausgangszustand eingenommen wird. Dies wird durch den Reset-Controller RC bewirkt.

Die im Signalisierungskanal übermittelten Signalisierungsinformationen sind gemäß dem Schichtenmodel (OSI-Referenzmodell) strukturiert. Die für Kommunikationsendgeräte - Kommunikationsanlagen-Signalisierung - eingesetzten Protokollschichten sind als Bitübertragungsschicht (Schicht 1) als Sicherungsschicht (Schicht 2) und als Vermittlungsschicht (Schicht 3) definiert. Diese Schichten sind grundsätzlich unabhängige Prozesse, die über Meldungen miteinander kommunizieren. Ist die Schicht 1 aktiv und synchron, dann wird versucht, auf der höheren Schicht 2 einen definierten Pulsrahmen in beiden Richtungen zu übertragen. Ist diese Datensicherungsschicht aufgebaut, dann wird die Fähigkeit der Schicht 1 benutzt, um Meldungen zu senden. Über diese Meldungen wird festgestellt, ob eine gesicherte Datenübertragung vorgenommen werden kann. Durch den vorgenommenen Reset werden die Schicht 1 und die Schicht 2 asynchron. Im Rahmen der vorgenommenen Reichweitenprüfung wird dies durch die Systemsteuerung festgestellt und als negatives Prüfergebnis gewertet. Es erfolgt dann eine entsprechende Anzeige auf dem Display, z.B. des Systemfernsprechendgerätes, oder es erfolgt ein Ausdruck. Wird keine Endgeräteausfallmeldung aufgrund eines Resets nach der Initialisierung der Prüfabläufe festgestellt, so wird dies als Indiz dafür gewertet, daß die maximale Leitungslänge nicht überschritten ist. Im erstgenannten Fall eines negativen Testergebnisses ist dann für das betreffende Kommunikationsendgerät die Anschaltung einer Zusatzspeiseeinrichtung erforderlich. Dies erfolgt z.B. durch die Anschaltung eines aus dem Netz N gespeisten Steckernetzteils SN.

Der erfindungsgemäßen Überprüfung der Reichweite wird der ungünstigste Belastungsfall zugrundegelegt. Bei der Überprüfung einer Endgerätekonfiguration, bei der, wie dies für die Endgeräte KE-M und KB-S gezeigt ist, zwei Endgeräte kaskadiert geschaltet sind, wird durch die Systemsteuerung veranlaßt, daß der maximale Belastungsfall für beide Endgeräte entsteht. Sind Zusatzgeräte ZE-M bzw. ZE-S vorhanden, die in der Regel steckbare Einheiten, z.B. in Form von Konsolen darstellen, dann wird auch die Aktivierung der darin enthaltenen Leuchtelemente veranlaßt. Erfolgt ein Reset eines oder beider Endgeräte, ist eine zusätzliche lokale Speiseeinrichtung SN notwendig.

Die Durchführung des Reichweitentestes ist insbesondere auch dann sinnvoll, wenn sich die Anlagenkonfiguration geändert hat. Durch die geschilderte Aktivierung des maximalen Verbrauches eines Endgerätes läßt sich dann durch einen Servicetechniker in einfacher Weise überprüfen, ob eine ausreichende Spannungsversorgung gegeben ist. Hierzu ist dann beispielsweise die Prüfprozedur durch die Einwahl bestimmter vorgegebener Kennzahlen anzufordern.

## Patentansprüche

1. Verfahren zur Feststellung der ordnungsgemäßen Fernspeisung von Kommunikationsendgeräten, die über eine Anschlußleitung an ein programmgesteuertes Kommunikationssystem angeschlossen sind, wobei eine unter anderem die vermittlungstechnische und betriebstechnische Steuerung und Koordinierung durchführende zentrale Systemsteuerung (MS) aus einem Systemspeicher (ROM, RAM, EEPROM) zur Speicherung von Programmodule und zur Speicherung von Daten und einem Systemprozessor (MP) besteht und infolge der von den Endgeräten übermittelten Anreizinformationen Ausgabeinformationen zur Darstellung an der Anzeigeeinrichtung (AZE) des jeweiligen Endgerätes (KE1) gebildet werden,
**dadurch gekennzeichnet,**
**daß** abhängig von einem entsprechenden Steuerbefehl durch die Systemsteuerung die Aktivierung sämtlicher optischer (AZE, LED) und akustischen Anzeigen des jeweiligen Endgerätes bewirkt wird, so daß angenähert die maximale, durch das Endgerät bzw. durch eine Endgerätekonstellation zu verursachende Belastung der Speisespannungsquelle besteht, daß die dabei endgeräteeingangsseitig an der Anschlußleitung auftretende Spannung registriert wird (SM) und bei Unterschreitung eines vorgegebenen Spannungswertes eine diesbezügliche und durch die Systemsteuerung bewertbare Signalisierungsinformation gebildet wird, daß aufgrund dieser Signalisierungsinformation eine auf die damit repräsentierte mangelnde Speisespannungsversorgung hinweisende Anzeige bzw. Registrierung vorgenommen wird, so daß dadurch die Notwendigkeit einer lokalen Zusatzspeisung erkennbar ist.

2. Verfahren nach Anspruch 1,
**dadurch gekennzeichnet,**
**daß** der Steuerbefehl entweder von einem Endgerät durch eine vorgegebene Prozedursteuerinformation oder zeitgesteuert durch die Systemsteuerung initiiert wird und daraufhin die Aktivierung der Anzeigen automatisch für alle angeschlossenen Kommunikationsendgeräte oder für eine vorgebbare Anzahl von definierten Kommunikationsendgeräten veranlaßt wird.

3. Verfahren nach Anspruch 1,
**dadurch gekennzeichnet,**
**daß** der Steuerbefehl von einem Endgerät (KE1) durch eine vorgegebene Prozedursteuerinformation initiiert wird und damit die Aktivierung der genannten Anzeige ausschließlich an diesem Endgerät (KE1) veranlaßt wird.

4. Verfahren nach Anspruch 1,
**dadurch gekennzeichnet,**
**daß** der Steuerbefehl automatisch mit der Inbetriebnahme des Kommunikationssystems und/oder routinemäßig zeitgesteuert initiiert wird.

5. Verfahren nach einem der Ansprüche 1 bis 4,
**dadurch gekennzeichnet,**
**daß** die auf die mangelnde Speisespannungsversorgung hinweisende Darstellung als entsprechende Anzeige an der Anzeigeeinrichtung (AZE) an einem vorbestimmten definierten und mit zusätzlicher Funktionalität ausgestatteten Kommunikationsendgerät (Systemfernsprechendgerät) oder an einer zentralen Druckeinrichtung ausgegeben wird.

6. Verfahren nach Anspruch 1,
**dadurch gekennzeichnet,**
**daß** die eine mangelnde Speisespannungsversorgung repräsentierende Signalinformationen durch einen bei Unterschreitung des vorgegebenen Spannungswertes verursachten Reset des betreffenden Endgerätes gebildet wird.

7. Verfahren nach Anspruch 1,
**dadurch gekennzeichnet,**
**daß** als optische Anzeigen sämtliche Anzeigeelemente der vorzugsweise als LCD-Display realisierten Anzeigeeinrichtung (AZE) des Endgerätes und sämtliche am Endgerät und an den gegebenenfalls unmittelbar räumlich zugeordneten Zusatzkonsolen vorhandenen weiteren Leuchtanzeigen (LED) aktiviert werden.

8. Verfahren nach Anspruch 1,
**dadurch gekennzeichnet,**
**daß** in den Fällen, in denen an einer ISDN-orientierten Anschlußleitung zwei Endgeräte (KE-M; KE-S) an ein und dieselbe Leitung kaskadiert angeschaltet sind, die Aktivierung der Anzeigen gleichzeitig an beiden Endgeräten und an den ihnen gegebenenfalls zugeordneten Konsolen (ZE-M; ZE-S) vorgenommen wird.

## Claims

1. Method for establishing correct remote power feeding for communications terminals which are connected to a program-controlled communication system by means of a subscriber line, where a central system controller (MS), which implements call-processing and operational control and coordination, inter alia, comprises a system memory (ROM, RAM, EEPROM), for storing program modules and for storing data, and a system processor (MP), and the event information transmitted by the terminals results in output information being formed for presentation on the indicator device (AZE) of the respective terminal (KE1),
**characterized**
**in that** an appropriate control command is taken as a basis for the system controller to activate all visual (AZE, LED) and audio indicators belonging to the respective terminal, so that the supply-voltage source is subject to approximately the maximum loading which can be brought about by the terminal or by a terminal configuration, that the voltage thus appearing on the subscriber line at the terminal-input end is registered (SM) and, in the event of this being below a prescribed voltage value, pertinent signalling information which can be assessed by the system controller is formed, that this signalling information results in indication, or registration, which points to the thus represented inadequate supply of supply voltage, which means that it is thus possible to identify the need for local supplementary power feeding.

2. Method according to Claim 1,
**characterized**
**in that** the control command is initiated either by a terminal as a result of a prescribed procedure control information item or under time control by the system controller, and activation of the indicators is then automatically prompted for all connected communications terminals or for a prescribable number of defined communications terminals.

3. Method according to Claim 1,
**characterized**
**in that** the control command is initiated by a terminal (KE1) as a result of a prescribed procedure control information item, and hence activation of said indicator is prompted exclusively on this terminal (KE1).

4. Method according to Claim 1,
**characterized**
**in that** the control command is automatically initiated when the communications system is started up and/or routinely under time control.

5. Method according to one of Claims 1 to 4,
**characterized**
**in that** the presentation pointing to the inadequate supply of supply voltage is output as a corresponding indicator on the indicator device (AZE) on a predetermined defined communications terminal (system terminal telephone) equipped with additional functions or on a central printing device.

6. Method according to Claim 1,
**characterized**
**in that** the signal information representing an inadequate supply of supply voltage is formed by a reset, brought about when the prescribed voltage value is undershot, on the terminal in question.

7. Method according to Claim 1,
**characterized**
**in that** the optical indicators activated are all indicator elements belonging to the terminal's indicator device (AZE), which is preferably in the form of an LCD display, and all further LED indicators (LED) which are present on the terminal and on the supplementary consoles possibly allocated in the immediate space.

8. Method according to Claim 1,
**characterized**
**in that**, in instances in which two terminals (KE-M; KE-S) on an ISDN-oriented subscriber line are connected to one and the same line in cascaded form, the indicators are activated simultaneously on both terminals and on the consoles (ZE-M; ZE-S) possibly associated therewith.

## Revendications

1. Procédé pour la détermination de la téléalimentation correcte de terminaux de communication, qui sont reliés à un système de communication commandé par programme par une ligne d'abonné, une commande de système centrale (MS) effectuant, entre autres, la commande et la coordination au plan de la commutation et de l'exploitation étant constituée d'une mémoire de système (ROM, RAM, EEPROM) pour la mémorisation de modules de programme et de données et d'un processeur de système (MP) et formant des informations de sortie à la suite des informations d'excitation transmises par les terminaux destinées à être représentées sur le dispositif d'affichage (AZE) du terminal (KE1) respectif, **caractérisé en ce que** en fonction d'une instruction de commande correspondante émise par la commande de système tous les affichages optiques (AZE, LED) et avertisseurs acoustiques du terminal respectif sont activés, si bien que la charge approximativement maximale de la source de tension d'alimentation à déclencher par le terminal ou par une constellation de terminaux, est mise à disposition, **en ce que** la tension apparue à cette occasion côté entrée du terminal sur la ligne d'abonné est enregistrée (SM) et si une valeur de tension prédéfinie n'est pas atteinte, une information de signalisation à ce sujet et pouvant être évaluée par la commande du système, est formée, et **en ce que** sur la base de cette information de signalisation un affichage ou un enregistrement indiquant ce manque d'alimentation en tension d'alimentation ainsi représenté est effectué, si bien que la nécessité d'une alimentation locale supplémentaire peut être constatée.

2. Procédé selon la revendication 1, **caractérisé en ce que** l'instruction de commande est initialisée soit par un terminal au moyen d'une information de commande de procédure prédéfinie ou de manière synchronisée par la commande du système et qu'ensuite l'activation des affichages est automatiquement déclenchée pour tous les terminaux de communication connectés ou pour un nombre présélectionnable de terminaux de communication définis.

3. Procédé selon la revendication 1, **caractérisé en ce que** l'instruction de commande est initialisée par un terminal (KE1) au moyen d'une information de commande de procédure prédéfinie et que l'activation dudit affichage est ainsi déclenchée exclusivement sur ce terminal (KE1).

4. Procédé selon la revendication 1, **caractérisé en ce que** l'instruction de commande est initialisée automatiquement à la mise en service du système de communication et/ou de manière synchronisée et routinière.

5. Procédé selon l'une des revendications 1 à 4, **caractérisé en ce que** la représentation indiquant le manque d'alimentation en tension d'alimentation est sortie comme affichage correspondant sur le dispositif d'affichage (AZE) sur un terminal de communication (terminal téléphonique de système) défini prédéterminé et équipé d'une fonctionnalité supplémentaire ou sur un dispositif d'impression centralisé.

6. Procédé selon la revendication 1, **caractérisé en ce que** les informations de signalisation représentant un manque d'alimentation en tension d'alimentation sont formées par une réinitialisation du terminal concerné déclenchée lorsque la valeur de tension prédéfinie n'est pas atteinte.

7. Procédé selon la revendication 1 **caractérisé en ce que** tous les éléments d'affichage du dispositif d'affichage (AZE), réalisé de préférence comme affichage à cristaux liquides du terminal, et tous les autres voyants lumineux (DEL) présents sur le terminal et les consoles supplémentaires qui leur sont directement affectées dans l'espace le cas échéant, sont activés comme affichage optique.

8. Procédé selon la revendication 1, **caractérisé en ce que** dans les cas où deux terminaux (KE-M ; KE-S) sont connectés en cascade sur une ligne d'abonné orientée RNIS sur une seule et même ligne, l'activation des affichages s'effectue simultanément sur les deux terminaux et sur les consoles (ZE-M ; ZE-S) qui leur sont éventuellement affectées.
